# EUROPEAN PATENT APPLICATION

(11) **EP 4 770 235 A1**
(43) Date of publication of application: **01.07.2026**
(21) Application number: 24856171.4
(22) Date of filing: 10.07.2024
(51) Int. Cl.: H04W 72/0457, H04W 8/24

(54) **TERMINAL AND COMMUNICATION METHOD**

(30) Priority: 22.08.2023 JP 2023134662
(71) Applicant: NTT DOCOMO, INC., Tokyo 100-6150 (JP)
(72) Inventor: OKANO, Mayuko, Tokyo 100-6150 (JP); HARADA, Hiroki, Tokyo 100-6150 (JP); KUMAGAI, Shinya, Tokyo 100-6150 (JP)
(74) Representative: Hoffmann Eitle
(86) International application number: PCT/JP2024/024978
(87) International publication number: WO 2025/041476

(57) **Abstract**

A terminal includes a controller configured to control reception processing of a plurality of common channels which are frequency-multiplexed and transmitted in consecutive slots, and a receiving unit configured to execute the reception processing of the plurality of common channels based on the reception processing, wherein the terminal is a terminal with reduced functions, a bandwidth of the common channels exceeds a predetermined bandwidth, and the controller is configured to control the reception processing based on a terminal capability indicating whether or not the reception processing is supported by the terminal.

## Description

### TECHNICAL FIELD

The disclosures herein relate to terminals and communication methods in a wireless communication system.

### BACKGROUND ART

In NR (New Radio) (also referred to as "5G"), which is a successor system to LTE (Long Term Evolution), as requirements, a technology to satisfy a large-capacity system, a high-speed data transmission rate, a low delay, simultaneous connection of a large number of terminals, a low cost, power saving and the like is being considered (e.g., Non-Patent Literature (NPL) 1).

In LTE or NR, a UE category or UE capability for the Internet of Things (IoT) is defined in which functions mandatorily supported by a normal terminal are reduced, for example, a function related to transmission and reception bandwidth and the number of antennas. For example, eMTC (Enhanced Machine Type Communication) and NB-IoT (Narrow Band IoT) are defined in LTE, and a RedCap (Reduced Capability) is defined in NR. Furthermore, an eRedCap (enhanced reduced capability) UE (user equipment) is being studied in advanced systems (e.g., 6G, which is a successor of NR Release 18 and NR).

### CITATION LIST

### NON-PATENT LITERATURE

NPL 1:3GPP TS 38.300 V17.3.0 (2022-12)
NPL 2:3GPP TS 38.214 V17.4.0 (2022-12)
NPL 3:3GPP TS 38.213 V17.4.0 (2022-12)

### SUMMARY OF INVENTION

### TECHNICAL PROBLEM

However, an eRedCap UE with reduced functions may be incapable of processing a PDSCH repeatedly transmitted in consecutive slots when the bandwidth of an MBS (Multicast and Broadcast Service) PDSCH (Physical Downlink Shared Channel) exceeds a predetermined bandwidth (e.g., 5 MHz).

The present invention has been made in view of the above-mentioned point, and it is an object of the present invention to appropriately execute reception processing of a common channel having a bandwidth exceeding a predetermined bandwidth which is repeatedly transmitted by a terminal with reduced functions in a wireless communication system.

### SOLUTION TO PROBLEM

A terminal includes a controller configured to control reception processing of a plurality of common channels which are frequency-multiplexed and transmitted in consecutive slots, and a receiving unit configured to execute the reception processing of the plurality of common channels based on the reception processing, wherein the terminal is a terminal with reduced functions, a bandwidth of the common channels exceeds a predetermined bandwidth, and the controller is configured to control the reception processing based on a terminal capability indicating whether or not the reception processing is supported by the terminal.

### ADVANTAGEOUS EFFECTS OF INVENTION

The present disclosure provides a terminal with reduced functions capable of appropriately executing reception processing of a frequency-multiplexed common channel in a wireless communication system.

### BRIEF DESCRIPTION OF DRAWINGS

[FIG. 1] FIG. 1 is a drawing illustrating an example of a configuration of a wireless communication system according to the present embodiment.
[FIG. 2] FIG. 2 is a drawing illustrating an example of supportability of an MBS PDSCH in an eRedCap UE.
[FIG. 3] FIG. 3 is a drawing illustrating an example in which a terminal according to the present embodiment transmits UE capability signaling related to frequency multiplexing of a plurality of PDSCHs in overlapping time resources.
[FIG. 4] FIG. 4 is a drawing illustrating an example of a functional configuration of a base station 10 according to the present embodiment.
[FIG. 5] FIG. 5 is a drawing illustrating an example of a functional configuration of a terminal 20 according to the present embodiment.
[FIG. 6] FIG. 6 is a drawing illustrating an example of a hardware configuration of the base station 10 or the terminal 20 according to the present embodiment.
[FIG. 7] FIG. 7 is a drawing illustrating an example of a configuration of a vehicle 2001 according to the present embodiment.

### DESCRIPTION OF EMBODIMENTS

In the following, embodiments of the present invention will be described with reference to the accompanying drawings. The embodiment described below is only an example, and the embodiment to which the present invention is applied is not limited to the following embodiment.

In an operation of a wireless communication system of the embodiment of the present invention, the existing technology is used as appropriate. Although the existing technology is, for example, the existing LTE, the existing technology is not limited to the existing LTE. A term "LTE" used in the present specification has a broad meaning including LTE-Advanced and later systems (e.g., NR) than LTE-Advanced unless otherwise specified.

In the embodiment of the present invention described below, terms such as SS (Synchronization signal), PSS (Primary SS), SSS (Secondary SS), PBCH (Physical Broadcast Channel), PRACH (Physical Random Access Channel), PDCCH (Physical Downlink Control Channel), PDSCH (Physical Downlink Shared Channel), PUCCH (Physical Uplink Control Channel), and PUSCH (Physical Uplink Shared Channel) used in existing LTE are used. This is for convenience of description, and signals and functions similar to these may be referred to as other names. The above terms in NR correspond to NR-SS, NR-PSS, NR-SSS, NR-PBCH, NR-PRACH, and the like. However, even signals used in NR are not necessarily referred to as "NR-".

In the embodiment of the present invention, a duplex system may be a TDD (Time Division Duplex) system, an FDD (Frequency Division Duplex) system, or any other (e.g., Flexible Duplex, etc.) system.

In the embodiment of the present invention, to "configure" wireless parameters and the like may mean that predetermined values are pre-configured, or that the wireless parameters notified from a base station 10 or a terminal 20 are configured.

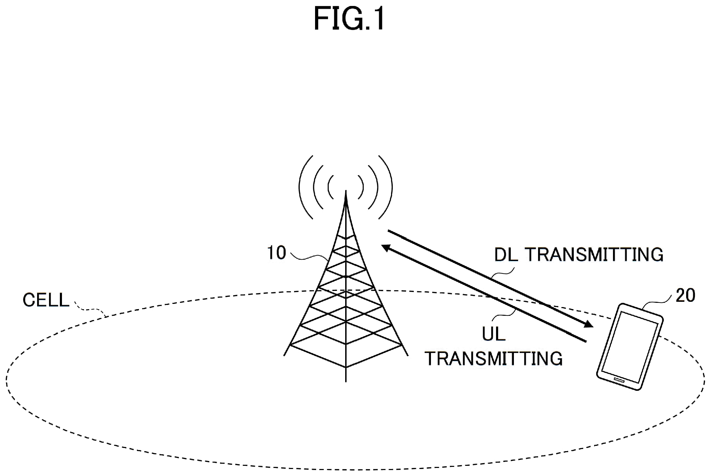

FIG. 1 is a drawing illustrating an example (1) of a configuration of a wireless communication system according to the present embodiment. As shown in FIG. 1, the wireless communication system according to the embodiment of the present invention includes the base station 10 and the terminal 20. Although one base station 10 and one terminal 20 are shown in FIG. 1, these are examples and a plurality of each may be used.

The base station 10 is a communication device that provides one or more cells and performs wireless communication with the terminal 20. Physical resources of a wireless signal are defined in a time domain and a frequency domain, and the time domain may be defined by the number of OFDM (Orthogonal Frequency Division Multiplexing) symbols, and the frequency domain may be defined by the number of subcarriers or resource blocks. The base station 10 transmits the synchronization signal and system information to the terminal 20. The synchronization signals are, for example, NR-PSS and NR-SSS. The system information is, for example, transmitted in NR-PBCH and is also referred to as broadcast information. The synchronization signal and system information may be referred to as SSB (SS/PBCH Block). As shown in FIG. 1, the base station 10 transmits control signals or data to the terminal 20 in DL (Downlink) and receives control signals or data from the terminal 20 in UL (Uplink). Both the base station 10 and the terminal 20 can transmit and receive signals by beamforming. Both the base station 10 and the terminal 20 can apply MIMO (Multiple Input Multiple Output) communication to DL or UL. Also, both the base station 10 and the terminal 20 may communicate via a secondary cell (SCell) and a primary cell (PCell) by CA (Carrier Aggregation). Further, the terminal 20 may perform communication via the primary cell of the base station 10 by DC (Dual Connectivity) and the primary secondary cell group cell (PSCell: Primary SCG Cell) of the other base station 10.

The terminal 20 is a communication device having a wireless communication function such as a smartphone, a mobile phone, a tablet, a wearable terminal, or a machine-to-machine (M2M) communication module. As shown in FIG. 1, the terminal 20 receives control signals or data from the base station 10 by DL and transmits control signals or data to the base station 10 by UL, thereby utilizing various communication services provided by the wireless communication system. The terminal 20 also receives various reference signals transmitted from the base station 10 and performs measurement of propagation path quality based on reception results of the reference signals.

The terminal 20 can perform carrier aggregation in which a plurality of cells (Multiple CCs (Component Carrier)) are bundled to communicate with the base station 10. In carrier aggregation, one PCell (Primary cell) and 1 or more SCells (Secondary cell) are used. A PUCCH-SCell with PUCCH may also be used.

First, RedCap of conventional NR Release 17 will be described. A maximum bandwidth supported by RedCapUE considered in the NR Release 17 is 20 MHz for a FR1 (Frequency Range 1) and 100 MHz for a FR2 (Frequency Range 2). The RedCapUE is required to coexist with the non-RedCapUE (Hereinafter, it is also referred to as "non-RedCapUE".) in the system.

The RedCapUE and the non-RedCapUE may also be able to share the same initial DL-BWP (Downlink Bandwidth Part) (including subcarrier spacing, bandwidth and position) set by the MIB (Master Information Block). Additionally, the initial DL-BWP may be configured with a separate or additional subcarrier interval, bandwidth, and position for the RedCapUE.

The RedCapUE may share the initial DL-BWP (Hereinafter, it is also referred to as "DL-BWP #0".) for the non-RedCapUE if it does not exceed the maximum bandwidth supported by the RedCapUE.

In addition, according to the NR release 17 specification, the DL-BWP and UL-BWP of the same index are required to have the same center frequency in the case of TDD to avoid RF re-tuning.

Moreover, the RedCapUE assumes that the initial DL-BWP and the active DL-BWP become less than or equal to the maximum DL bandwidth supported by the RedCapUE after (re)establishing a dedicated RRC connection. The RedCapUE is provided with DL-BWP by "initialDownlinkBWP" in "DownlinkConfigCommonRedCapSIB" and UL-BWP by "initialUplinkBWP" in "UplinkConfigCommonRedCapSIB". When "initialUplinkBWP" of "UplinkConfigCommonSIB" shows a UL-BWP greater than the maximum UL-BWP supported by the RedCapUE, the RedCapUE assumes that the UL-BWP is provided by "initialUplinkBWP" of "UplinkConfigCommonRedCapSIB".

The RedCapUE may be provided with DL-BWP by "BWP-DownlinkDedicated" in addition to initial DL-BWP. The RedCapUE may be provided with UL-BWP by "BWP-UplinkDedicated" in addition to initial UL-BWP less than or equal to the maximum UL bandwidth supported by the RedCapUE.

When the RedCapUE is provided with "RACH-ConfigCommon-RedCap" or "RACH-ConfigCommonTwoStepRA-RedCap", the RedCapUE performs initial access and random access procedures using the corresponding parameters. Otherwise, RedCapUE uses the corresponding parameters provided by "RACH-ConfigCommon" or "RACH-ConfigCommonTwoStepRA".

The RedCapUE is provided with "initialUplinkBWP" of "UplinkConfigCommonRedCapSIB" and sends PUCCH with HARQ-ACK information using PUCCH resource set provided by "pucch-ResourceCommonRedCap" if there is no dedicated PUCCH resource configuration. Note that when "disable-FH-PUCCH" is provided in "PUCCH-ConfigCommonRedCap", PUCCH transmission is disabled.

For an initial DL-BWP provided by "initialDownlinkBWP" of "DownlinkConfigCommonRedCapSIB", the RedCapUE recognizes that the initial DL-BWP does not contain an SS/PBCH block or a CORESET (Control resource set) with index 0 if it observes PDCCH according to the CSS (Common search space) set of Type1-PDCCH and does not observe PDCCH according to the CSS set of Type2-PDCCH.

The RedCapUE assumes that when PDCCH is observed according to the CSS set of Type2-PDCCH, when the RedCapUE acquires SIB1 using an SS/PBCH block, an SS/PBCH block and a CORESET of the index 0 are included in the initial DL-BWP, and when an SS/PBCH block is included, and the SS/PBCH block used by the RedCapUE to acquire SIB1 is not included in the initial DL-BWP, the CORESET of the index 0 is not included.

In the case of an active DL-BWP provided by "BWP-DownlinkDedicated", the RedCapUE assumes that an SS/PBCH block is included and the CORESET with the index 0 is not included in the active DL-BWP, except in the case of a function operating in the DL-BWP without receiving an SS/PBCH block being indicated.

Next, RedCap in NR Release 18 will be described. In the NR release 18, eRedCap is being considered to further reduce the complexity of the RedCapUE for NR release 17. Hereinafter, a terminal with reduced functions for NR release 17 is referred to as a RedCapUE, and an extended terminal with reduced functions for NR release 18 is referred to as an eRedCapUE.

An effect to the network, coexistence of RedCapUE or eRedCapUE with non-RedCapUE in a cell, an effect to the UE, an effect to the specification, etc. are considered. Potential solutions that may complement each other to reduce device complexity focus on below.

The first solution is considered to reduce the UE bandwidth to 5 MHz in the FR1. This solution may be specified in combination with relaxed UE processing timelines of PDSCH and/or PUSCH and/or CSI.

The second solution is to reduce the UE peak data rate of the FR1. This solution may include limited bandwidth of PDSCH and/or PUSCH and may be specified in combination with relaxed UE processing timelines of PDSCH and/or PUSCH and/or CSI.

Regarding the eRedCapUE, the need to take note of the following is considered. That is, SSB specified in NR release 15 is required to be reused to minimize the change of L1. Further, BWP behavior with or without SSB, and with or without RF Retuning are required to be considered. Furthermore, it is considered that some solutions of the FR1 can be applied to the FR2. Moreover, defining a type of reduced-functionality terminal for a single release 18 is considered in order to further reduce the complexity of UE.

The eRedCap UE may be defined as follows.

For example, the terminal 20 that reports that its device is an eRedCap UE by at least one of Msg1, Msg3, and MsgA in a random access procedure may be defined as an eRedCap UE.

For example, the terminal 20 that supports a particular UE capability may be defined as an eRedCap UE. The particular UE capability may be, for example, 1) to 7) shown below.
1) Support up to 5 MHz bandwidth for PDSCH and PUSCH in the FR1.
2) Support relaxed UE processing time for PDSCH, PUSCH and/or CSI.
3) Support reduced UE peak data rate in the FR1.
4) Support 1 or 2 receive branches and corresponding maximum number of DL-MIMO layers.
5) Support FD (Full Duplex)-FDD or Type A HD (Half Duplex)-FDD in a FR1FDD band.
6) Support 64QAM (Quadrature Amplitude Modulation) or 256QAM in the FR1.
7) Do not support carrier aggregation or dual connectivity.

The terminal 20 that reports to the base station 10 that it supports the particular UE capability by a UE capability report may be defined as an eRedCap UE. The existing terminal in the present embodiment may be a terminal other than an eRedCap UE.

Additionally, the MBS function of the terminal is defined. Support of MBS PDSCH repetition (MBS PDSCH repeat transmission) is an essential function of a terminal that supports MBS. When a terminal reports support of the MBS function, it must support MBS PDSCH repetition.

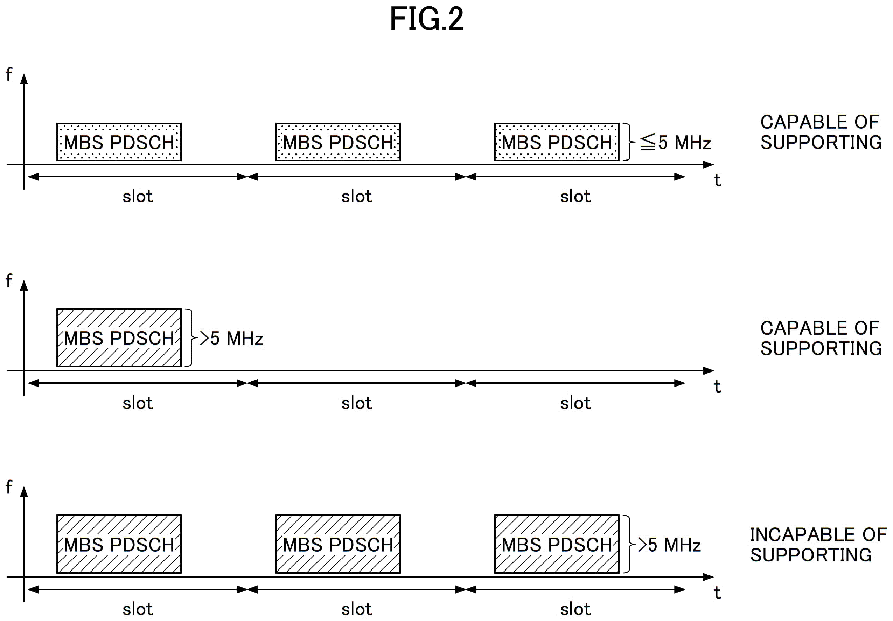

As shown in the upper part of FIG. 2, the eRedCap UE supports the reception processing of MBS PDSCH having a bandwidth of 5 MHz or less which is repeatedly transmitted in consecutive slots.

As shown in the middle part of FIG. 2, the eRedCap UE supports the reception processing of MBS PDSCH having a bandwidth exceeding 5 MHz which is transmitted in a single slot.

However, as shown in the lower part of FIG. 2, a conventional eRedCap UE does not support the reception processing of MBS PDSCH having a bandwidth exceeding 5 MHz which is repeatedly transmitted in consecutive slots. Therefore, there is a possibility that the conventional eRedCap UE cannot properly execute the reception processing of such PDSCH.

The terminal (e.g., eRedCap UE) in the present embodiment can properly report information related to the frequency multiplexing of a plurality of PDSCH in overlapping time resources in consideration of the processing capability of the eRedCap UE.

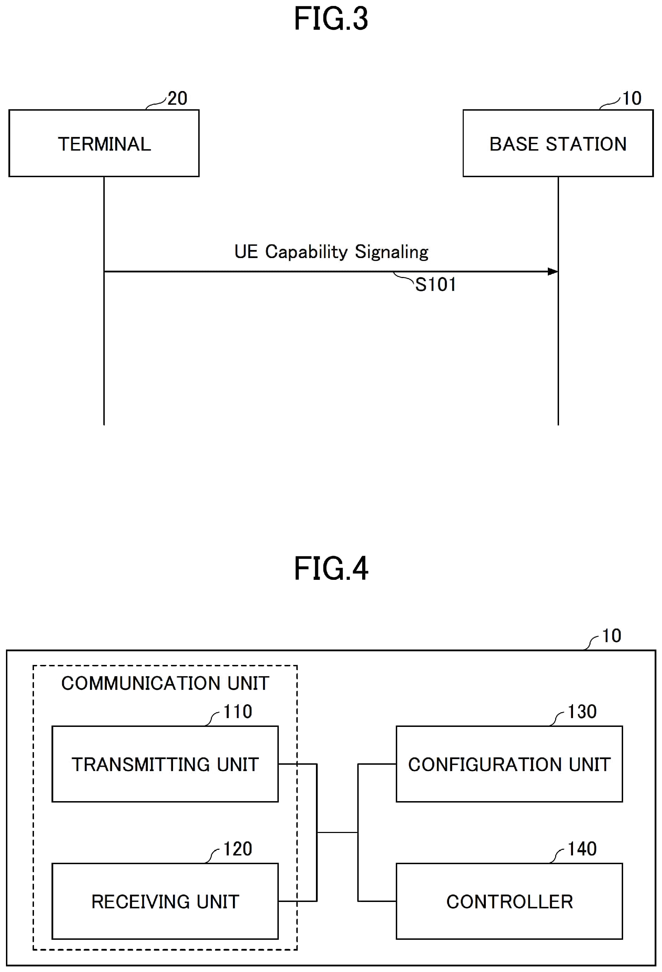

According to the present embodiment, UE capability signaling for frequency multiplexing of a plurality of PDSCH in overlapping time resources is specified for eRedCap UE. For example, as shown in FIG. 3, the terminal 20 (eRedCap UE) transmits to the base station a terminal capability (UE capability) indicating whether or not to support the reception of MBS PDSCH having a bandwidth exceeding 5 MHz, which is repeatedly transmitted in consecutive slots (S101).

In the present embodiment, eRedCap (eRedCap UE) may be replaced by Second RedCap (Second RedCap UE).

According to the present embodiment, terminal operation or terminal capability for frequency multiplexing of a plurality of PDSCH in overlapping time resources is specified in a specification. The specification is, for example, a specification of 3GPP (Example: Technical Specification or Technical Report), and the terminal 20 operates in accordance with the specification. That is, the terminal 20 assumes operation for frequency multiplexing of a plurality of PDSCH in overlapping time resources specified in the specification, and executes operation based on the assumption.

In the present embodiment, the multiplexed PDSCH may be a combination of at least two or more of the following four types of PDSCH.
1) Broadcast MBS PDSCH (MCCH, MTCH)
   A Broadcast MBS PDSCH may be a PDSCH scheduled by at least one of MCCH-RNTI or G-RNTI. However, the Broadcast MBS PDSCH is not required to be limited to this.
2) Multicast MBS PDSCH
   A Multicast MBS PDSCH may be a PDSCH scheduled by at least one of G-RNTI or G-CS-RNTI. However, the Multicast MBS PDSCH is not required to be limited to this.
3) Unicast PDSCH
   A Unicast PDSCH may be a PDSCH scheduled by at least one of C-RNTI, MCS-C-RNTI, or CS-RNTI. However, the Unicast PDSCH is not required to be limited to this.
4) Broadcast PDSCH
   A Broadcast PDSCH may be a PDSCH scheduled by at least one of SI-RNTI, P-RNTI, RA-RNTI, or TC-RNTI. However, the Broadcast PDSCH is not required to be limited to this.

In the present embodiment, the frequency-multiplexed PDSCH may partially overlap in the time domain or may overlap entirely. As another example, if the frequency-multiplexed PDSCH are scheduled in the same slot, the frequency-multiplexed PDSCH is not required to overlap in the time domain.

For the eRedCap UE, the UE capability signaling for frequency multiplexing of multiple PDSCH in overlapping time resources is specified.

### (FIRST EMBODIMENT)

According to the first embodiment, an operation for supporting broadcast MBS PDSCH reception is specified at the terminal 20.

In each of the following options of the first embodiment, the broadcast MBS PDSCH may be limited to the case where the frequency domain resource allocation (FDRA) exceeds the number of RBs (25 RB for 15 kHz SCS/12 RB for 30 kHz SCS) equivalent to 5 MHz.

Option 1-1: The eRedCap UE (UE supporting the function specified in FG48-1 or FG48-2) is not required to support the repetition of the broadcast MBS PDSCH configured by the RRC when it reports the broadcast function (function specified in FG33-1).

The repetition of the broadcast MBS PDSCH by the RRC may be limited to 5 MHz when the eRedCap UE reports the support of FG33-1.

Modification 1 of Option 1-1: The eRedCap UE (UE supporting the function specified in FG48-1 or FG48 -2) is not required to assume that broadcast MBS PDSCH is scheduled to consecutive slots when it reports the broadcast function (function specified in FG33-1).

Modification 2 of Option 1-1: The eRedCap UE (UE supporting the function specified in FG48-1 or FG48-2) is not required to assume that another PDSCH is scheduled to a slot contiguous with the broadcast MBS PDSCH when it reports the broadcast function (function specified in FG33-1).

Option 1-2: Incapability signaling may be specified to report that the repetition of broadcast MBS PDSCH configured by RRC is not supported at the terminal 20.

Option 1-3: UE capability signaling may be specified to report the support of broadcast basic functions for eRedCap UEs.

Option 1-3-1: The functions specified in UE capability signaling in the present embodiment are not required to include the repetition of broadcast MBS PDSCH configured by RRC among the functions specified in FG33-1.

Option 1-3-2: The functions specified in UE capability signaling in the present embodiment may be limited to the repetition of broadcast MBS PDSCH configured by RRC among the functions specified in FG33-1 when the PDSCH is 5 MHz.

Option 1-3-3: UE capability signaling may be specified to report that broadcast MBS PDSCH is not assumed to be assigned to consecutive slots.

Option 1-3-4: A UE capability signaling may be provided to report that no other PDSCH is assumed to be assigned to a slot contiguous with the broadcast MBS PDSCH.

Option 1-4: A new UE capability signaling may be provided to report support for repetition of broadcast MBS PDSCH configured/notified by RRC and/or DCI.

Option 1-4-1: A UE capability signaling may be provided to support repetition if the FDRA of the PDSCH does not exceed the number of RBs equivalent to 5 MHz.

Option 1-4-2: A UE capability signaling may be provided to support repetition if the FDRA of the PDSCH exceeds the number of RBs equivalent to 5 MHz.

Modification 1 of Option 1-4: A new UE capability signaling may be provided to report support when broadcast MBS PDSCH is scheduled for consecutive slots.

Modification 1-1 of Option 1-4: UE capability signaling of support if the FDRA of the PDSCH does not exceed the number of 5 MHz equivalent RBs may be specified.

Modification 1-2 of Option 1-4: UE capability signaling of support if the FDRA of the PDSCH exceeds the number of 5 MHz equivalent RBs may be specified.

Modification 2 of Option 1-4: A new UE capability signaling may be specified to report support when another PDSCH is scheduled for a slot contiguous with the broadcast MBS PDSCH.

Modification 2-1 of Option 1-4: UE capability signaling of support if the FDRA of the PDSCH does not exceed the number of 5 MHz equivalent RBs may be specified.

Modification 2-2 of Option 1-4: UE capability signaling of support if the FDRA of the PDSCH exceeds the number of 5 MHz equivalent RBs may be specified.

### (SECOND EMBODIMENT)

According to a second embodiment, the operation for supporting multicast MBS PDSCH reception at the terminal 20 is defined.

For each option in the second embodiment, multicast MBS PDSCH may be limited to cases where the FDRA exceeds the number of RBs (25 RB for 15 kHz SCS/12 RB for 30 kHz SCS) equivalent to 5 MHz.

Option 2-1: If the eRedCap UE (UE supporting the functions specified in FG48-1 or FG48-2) reports multicast functions (functions specified in FG33-2), it is not required to support multicast MBS PDSCH repetition.

If the eRedCap UE reports support for FG33-1, multicast MBS PDSCH repetition may be limited to 5 MHz.

Modification 1 of Option 2-1: An eRedCap UE (UE that supports the capabilities specified in FG48-1 or FG48-2) is not required to assume a multicast MBS PDSCH to be scheduled to consecutive slots when it reports a multicast capability (as specified in FG33-2).

Modification 2 of Option 2-1: An eRedCap UE (UE that supports the capabilities specified in FG48-1 or FG48-2) is not required to assume another PDSCH to be scheduled in a slot contiguous with the multicast MBS PDSCH when it reports a multicast capability (as specified in FG33-2).

Option 2-2: An Incapability signaling may be specified that reports no support for multicast MBS PDSCH repetition.

Option 2-3: A UE capability signaling may be specified that reports support for multicast base capabilities for eRedCap UEs.

Option 2-3-1: The capabilities specified in the new UE capability signaling is not required to include the RRC configured multicast MBS PDSCH repetition among the capabilities specified in FG33-2.

Option 2-3-2: The functionality specified in the new UE capability signaling may be limited to the functionality specified in FG33-2 where the repetition of a multicast MBS PDSCH set by RRC is 5 MHz.

Option 2-3-3: A UE capability signaling may be specified that reports that no multicast MBS PDSCH is assumed to be assigned to consecutive slots.

Option 2-3-4: A UE capability signaling may be specified that reports that no other PDSCH is assumed to be assigned to a slot contiguous with a multicast MBS PDSCH.

Option 2-4: A new UE capability signaling may be specified that reports support for repetition of multicast MBS PDSCH.

Option 2-4-1: A UE capability signaling may be specified that supports repetition if the FDRA of the PDSCH does not exceed the number of RBs equivalent to 5 MHz.

Option 2-4-2: UE capability signaling of support repetition if the FDRA of the PDSCH exceeds the number of RBs equivalent to 5 MHz may be specified.

Modification 1 of Option 2-4: A new UE capability signaling may be specified to report support when a multicast MBS PDSCH is scheduled for consecutive slots.

Modification 1 of Option 2-4-1: UE capability signaling of support when the FDRA of the PDSCH does not exceed the number of RBs equivalent to 5 MHz may be specified.

Modification 1 of Option 2-4-2: UE capability signaling of support when the FDRA of the PDSCH exceeds the number of RBs equivalent to 5 MHz may be specified.

Modification 2 of Option 2-4: A new UE capability signaling may be specified to report support when another PDSCH is scheduled for a slot contiguous with the multicast MBS PDSCH.

Modification 2-1 of Option 2-4: UE capability signaling of support when the FDRA of the PDSCH does not exceed the number of RBs equivalent to 5 MHz may be specified.

Modification 2-2 of Option 2-4: UE capability signaling of support when the FDRA of the PDSCH exceeds the number of RBs equivalent to 5 MHz may be specified.

In the above first and second embodiments, a newly specified UE capability may be reported with a different reporting granularity (per UE, per band, per BC, etc.) than the UE capability signaling (per FS) of the MBS.

"Per" indicates a level at which a relevant parameter is included. "Per UE" indicates that the relevant parameter is signaled per UE. "Per Band" indicates that the relevant parameter is signaled per band. "Per BC (Band Combination)" indicates that the relevant parameter is signaled per band combination. "Per FS (Feature Set)" indicates that the relevant parameters are signaled per feature set. "Per FS" may indicate that the parameters are signaled per feature set per band per band combination.

### (THIRD EMBODIMENT)

According to a third embodiment, operation is specified for support of multiplexing unicast PDSCH and broadcast PDSCH in terminal 20.

In each option of the third embodiment, Broadcast PDSCH (SI PDSCH, RAR PDSCH, etc.) may be limited to values exceeding 5 MHz.

Option 3-1: UE capability signaling may be specified to report support of multiplexing other PDSCH in the same slot as broadcast PDSCH.

Option 3-2: UE capability signaling may be provided to report that the broadcast PDSCH supports multiplexing of other PDSCH in consecutive slots.

### (DEVICE CONFIGURATION)

Next, an example of the functional configuration of the base station 10 and the terminal 20 for executing the processes and operations described above will be described. The base station 10 and the terminal 20 include functions for executing the above-described embodiments. However, the base station 10 and the terminal 20 may each have only some of the functions in the embodiments.

### < BASE STATION 10>

FIG. 4 is a drawing illustrating an example of a functional configuration of the base station 10 according to the present embodiment. As shown in FIG. 4, the base station 10 includes a transmitting unit 110, a receiving unit 120, a configuration unit 130, and a controller 140. The functional configuration shown in FIG. 4 is merely an example. As long as the operation according to the embodiment of the present invention can be performed, the functional categories and names of the functional units may be any.

The transmitting unit 110 includes a function of generating a signal to be transmitted to the terminal 20 and wirelessly transmitting the signal. The transmitting unit 110 also transmits an inter-network node message to another network node. The receiving unit 120 includes a function of receiving various signals transmitted from the terminal 20 and acquiring, for example, information of a higher layer from the received signal. The transmitting unit 110 also has a function of transmitting NR-PSS, NR-SSS, NR-PBCH, DL/UL control signals and the like to the terminal 20. The receiving unit 120 also receives an inter-network node message from another network node.

The configuration unit 130 stores preset setting information and various setting information to be transmitted to the terminal 20. The contents of the setting information are, for example, information related to scheduling.

The controller 140 performs control for achieving the functions described in the embodiment. The controller 140 also performs control related to scheduling as described in the embodiment. A functional unit related to signal transmission in the controller 140 may be included in the transmitting unit 110, and a functional unit related to signal reception in the controller 140 may be included in the receiving unit 120.

### < TERMINAL 20>

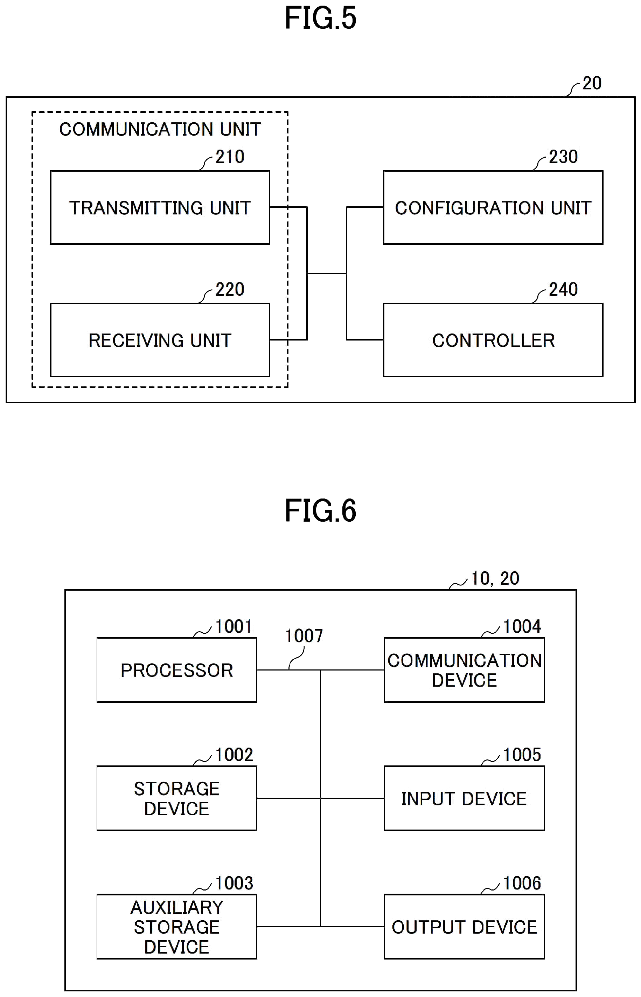

FIG. 5 is a drawing illustrating an example of a functional configuration of the terminal 20 according to the present embodiment. As shown in FIG. 5, the terminal 20 includes a transmitting unit 210, a receiving unit 220, a configuration unit 230, and a controller 240. The functional configuration shown in FIG. 5 is merely an example. As long as the operation according to the embodiment of the present invention can be performed, the functional categories and names of the functional units may be any.

The transmitting unit 210 generates a transmission signal from the transmission data and transmits the transmission signal wirelessly. The receiving unit 220 receives various signals wirelessly and acquires a signal of a higher layer from the received physical layer signal. The receiving unit 220 has a function of receiving NR-PSS, NR-SSS, NR-PBCH, DL, UL, and SL control signals, DCI by PDCCH, and data by PDSCH transmitted from the base station 10. For example, the transmitting unit 210 may transmit PSCCH (Physical Sidelink Control Channel), PSSCH (Physical Sidelink Shared Channel), PSDCH (Physical Sidelink Discovery Channel), PSBCH (Physical Sidelink Broadcast Channel), and the like to the other terminal 20 as D2D communication, and the receiving unit 220 receives PSCCH, PSSCH, PSDCH, PSBCH, and the like from the other terminal 20.

The configuration unit 230 stores various types of setting information received from the base station 10 by the receiving unit 220. The configuration unit 230 also stores setting information set in advance. The contents of the setting information are, for example, information related to scheduling.

The controller 240 performs control for realizing the functions described in the embodiment. The controller 240 also performs control related to scheduling as described in the embodiment. A functional unit related to signal transmission in the controller 240 may be included in the transmitting unit 210, and a functional unit related to signal reception in the controller 240 may be included in the receiving unit 220.

### (HARDWARE STRUCTURE)

The block diagrams that have been used to describe the above embodiments (FIG. 4 and FIG. 5) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

For example, the base station 10, the terminal 20, etc., according to an embodiment of the present disclosure may function as a computer for processing the radio communication method of the present disclosure. FIG. 6 is a drawing illustrating an example of a hardware configuration of the base station 10 or the terminal 20 according to one embodiment. Physically, the above-described base station 10 and terminal 20 may each be formed as a computer apparatus that includes a processor 1001, a storage device 1002, an auxiliary storage device 1003, a communication device 1004, an input device 1005, an output device 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the storage device 1002, and by allowing the processor 1001 to perform calculations to control communication via the communication device 1004 and control at least one of reading or writing of data in the storage device 1002 and the auxiliary storage device 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described controller 140, controller 240, and so on may be implemented by the processor 1001.

Furthermore, the processor 1001 reads programs (program codes), software modules, data, or the like, from at least one of the auxiliary storage device 1003 and the communication device 1004, into the storage device 1002, and executes various processes according to these. As for the programs, programs to allow computers to execute at least part of the operations of the above-described embodiments are used. For example, the controller 140 of the base station 10 illustrated in FIG. 4 may be implemented by control programs that are stored in the storage device 1002 and that operate on the processor 1001. In addition, for example, the controller 240 of the terminal 20 illustrated in FIG. 5 may be implemented by control programs that are stored in the storage device 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The storage device 1002 may be referred to as a "register", a "cache", a "main memory (primary storage apparatus)" and so on. The storage device 1002 can store executable programs (program codes), software modules, and the like for implementing the communication method according to one embodiment of the present disclosure.

The auxiliary storage device 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the storage device 1002 and/or the auxiliary storage device 1003, a server, or any other appropriate medium.

The communication device 1004 is hardware (transmitting/receiving device) for allowing inter-computer communication via at least one of wired and wireless networks, and may be referred to as, for example, a network device, a network controller, a network card, a communication module, and so on. The communication device 1004 may be configured to include a high frequency switch, a duplexer, a filter, a frequency synthesizer, and so on in order to realize, for example, at least one of frequency division duplex (FDD) and time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives input from the outside (for example, a keyboard, a mouse, a microphone, a switch, a button, a sensor, and so on). The output device 1006 is an output apparatus that outputs something to the outside (e.g., display, speaker, LED lamp). Note that the input device 1005 and the output device 1006 may be provided in an integrated structure (for example, a touch panel).

Furthermore, these types of apparatus, including the processor 1001, the storage device 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

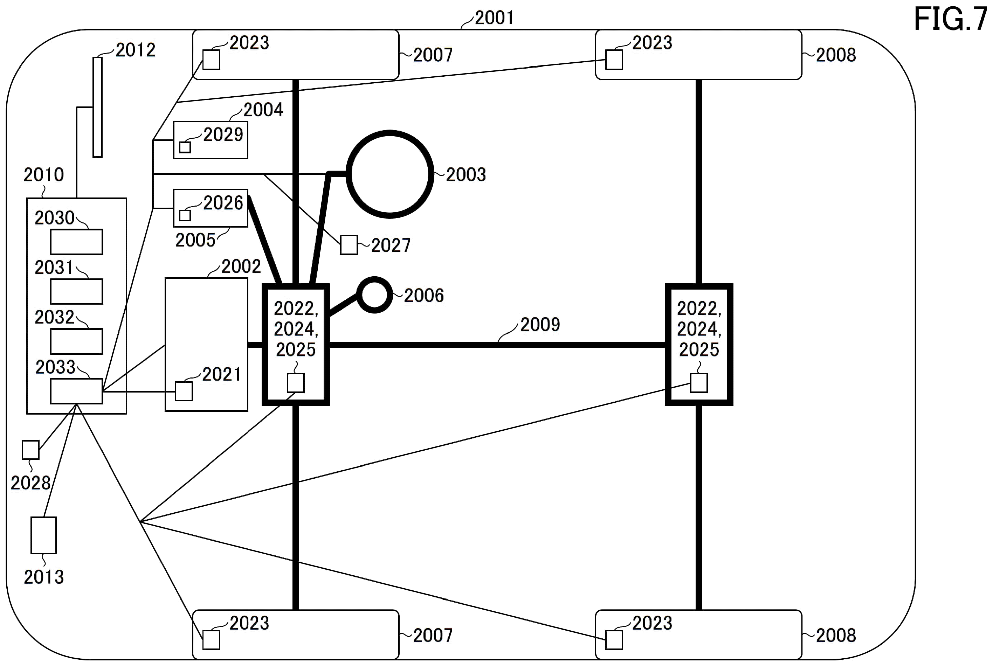

FIG. 7 shows an example of a configuration of a vehicle 2001. As shown in FIG. 7, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (SUMMARY OF EMBODIMENTS)

As described above, the terminal according to the present embodiment includes a controller configured to control reception processing of a plurality of common channels which are frequency-multiplexed and transmitted in consecutive slots, and a receiving unit configured to execute the reception processing of the plurality of common channels based on the reception processing, wherein the terminal is a terminal with reduced functions, a bandwidth of the common channels exceeds a predetermined bandwidth, and the controller is configured to control the reception processing based on a terminal capability indicating whether or not the reception processing is supported by the terminal.

The terminal according to the present embodiment further includes a transmitting unit configured to transmit the terminal capability to a base station.

A communication method performed by a terminal according to the present embodiment includes a step of controlling reception processing of a plurality of common channels which are frequency-multiplexed and transmitted in consecutive slots, and a step of executing the reception processing of the plurality of common channels based on the reception processing, wherein the terminal is a terminal with reduced functions, a bandwidth of the common channels exceeds a predetermined bandwidth, and the step of controlling is a step to control the reception processing based on a terminal capability indicating whether or not the reception processing is supported by the terminal.

With the above configuration, the terminal 20 being an eRedCap UE can appropriately control the reception processing of a frequency-multiplexed common channel transmitted in consecutive slots and having a bandwidth exceeding a predetermined bandwidth.

### (SUPPLEMENT OF EMBODIMENT)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an RRC message, and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station or a mobile station may be referred to as a transmitting apparatus, a receiving apparatus, a radio communication apparatus, and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompass a wide variety of actions. For example, "determining" may be regarded as judging, calculating, computing, processing, deriving, investigating, looking up (search, inquiry) (e.g., looking up in a table, a database, or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", "considering", or the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS", and may be referred to as a "pilot", and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI", a plurality of consecutive subframes may be referred to as a "TTI", or one slot or one mini-slot may be referred to as a "TTI". In other words, at least one of a subframe or a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI", a "normal subframe", a "long subframe", a "slot", or the like. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of consecutive common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). For a UE, one or more BWPs may be configured in one carrier.

At least one of the configured BWPs may be activated, and the UE may assume that the UE will not transmit and receive signals/channels outside the activated BWP. Note that a "cell", a "carrier", and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other". It should be noted that the term "A and B are different" may mean "A and B are different from C". Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

The present application is based on and claims priority to Japanese patent application No. 2023-134662 filed on August 22, 2023, with Japan Patent Office, the entire contents of which are hereby incorporated by reference.

### DESCRIPTION OF REFERENCE NUMERALS

- 10: base station
- 110: transmitting unit
- 120: receiving unit
- 130: configuration unit
- 140: controller
- 20: terminal
- 210: transmitting unit
- 220: receiving unit
- 230: configuration unit
- 240: controller
- 30: core network
- 1001: processor
- 1002: storage device
- 1003: auxiliary storage device
- 1004: communication device
- 1005: input device
- 1006: output device
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: rotational speed sensor
- 2023: air pressure sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driver support system unit
- 2031: microprocessor
- 2032: memory (ROM, RAM)
- 2033: communication port (IO port)

## Claims

1. A terminal comprising:
a controller configured to control reception processing of a plurality of common channels which are frequency-multiplexed and transmitted in consecutive slots; and
a receiving unit configured to execute the reception processing of the plurality of common channels based on the reception processing, wherein:
the terminal is a terminal with reduced functions;
a bandwidth of the common channels exceeds a predetermined bandwidth; and
the controller is configured to control the reception processing based on a terminal capability indicating whether or not the reception processing is supported by the terminal.

2. The terminal according to claim 1, further comprising a transmitting unit configured to transmit the terminal capability to a base station.

3. A communication method performed by a terminal, comprising:
controlling reception processing of a plurality of common channels which are frequency-multiplexed and transmitted in consecutive slots; and
executing the reception processing of the plurality of common channels based on the reception processing, wherein:
the terminal is a terminal with reduced functions;
a bandwidth of the common channels exceeds a predetermined bandwidth; and
the controlling is controlling the reception processing based on a terminal capability indicating whether or not the reception processing is supported by the terminal.
